# DEMANDE DE BREVET EUROPEEN

(11) **EP 4 710 752 A1**
(43) Date de publication de la demande: **18.03.2026**
(21) Numéro de dépôt: 25202065.6
(22) Date de dépôt: 15.09.2025
(51) Int. Cl.: A01G 9/24, A01G 17/00

(54) **PROCÉDÉ DE COLORATION EN AGRICULTURE**

(30) Priorité: 17.09.2024 FR 2409878
(71) Demandeur: Sun'Agri, 75017 Paris (FR)
(72) Inventeur: LOPEZ VELASCO, Gerardo, 34080 Montpellier (FR); JUILLION, Perrine, 69008 Lyon (FR); FUMEY, Damien, 34070 Montpellier (FR)
(74) Mandataire: Ipsilon

(57) **Abrégé**

Procédé de coloration de fruits (F) de végétaux (A), notamment d'arbres fruitiers, situés sous des capteurs photovoltaïques orientables (C), l'ombre projetée sur les végétaux étant modifiée par le changement d'orientation des capteurs (C), procédé dans lequel on agit automatiquement sur l'orientation des capteurs en fonction de l'état de coloration des fruits (F) de manière à augmenter l'ensoleillement par rapport à une référence de pilotage des capteurs appliquée lorsque la coloration souhaitée est atteinte ou lorsque les fruits sont non encore colorés, pour favoriser l'action du soleil sur la coloration.

## Description

### Domaine technique

La présente invention concerne la coloration des fruits en agriculture.

### Technique antérieure

La coloration des fruits est un processus naturel qui se produit à mesure que les fruits mûrissent. C'est un changement visuel significatif qui accompagne la maturation des fruits et est souvent utilisé comme indicateur de leur état de maturité. La coloration des fruits est principalement due à des changements dans les pigments présents dans les cellules du fruit. La synthèse ou la dégradation de ces pigments peuvent être influencées par divers facteurs tels que la température, la lumière, l'humidité, et le niveau de maturité du fruit lui-même. Par exemple, certaines conditions environnementales, comme des températures froides, peuvent retarder ou altérer la coloration des fruits. La coloration des fruits est souvent un signe de maturité, ce qui signifie que le fruit est prêt à être consommé. Cependant, ce n'est pas toujours le cas pour tous les fruits. Certains fruits peuvent être cueillis avant d'avoir atteint leur pleine coloration et mûriront davantage après la récolte.

La demande CN104641990 divulgue un dispositif de pot de fleurs rotatif pour contrôler l'irradiation uniforme des plantes. Grâce à ce dispositif, les dommages qui peuvent être causés aux plantes à cause d'une irradiation forte ou prolongée sont évités. Ainsi, les fleurs et les fruits peuvent être uniformément colorés.

### Exposé de l'invention

Il existe un besoin pour perfectionner encore les méthodes de coloration de fruits de végétaux, notamment d'arbres fruitiers, en particulier situés sous des capteurs photovoltaïques, afin d'optimiser le processus de coloration tout en produisant de l'énergie électrique.

L'invention vise à répondre à cet objectif et a pour objet, selon l'un de ses aspects, un procédé de coloration de fruits de végétaux, notamment d'arbres fruitiers, situés sous des capteurs photovoltaïques orientables, l'ombre projetée sur les végétaux étant modifiée par le changement d'orientation des capteurs, procédé dans lequel on agit automatiquement sur l'orientation des capteurs en fonction de l'état de coloration des fruits de manière à augmenter l'ensoleillement par rapport à une référence de pilotage des capteurs appliquée lorsque la coloration souhaitée est atteinte ou lorsque les fruits sont non encore colorés, pour favoriser l'action du soleil sur la coloration.

L'invention permet ainsi de profiter de la présence de capteurs photovoltaïques pour favoriser l'action du soleil sur la coloration.

De préférence, l'orientation des capteurs photovoltaïques est pilotée à partir au moins de données représentatives des stades phénologiques des végétaux, notamment l'état de la coloration des fruits, les indicateurs de l'état de coloration des fruits comprenant en particulier leurs couleurs et/ou la taille des organes les constituant et/ou le nombre de fruits colorés par rapport au nombre total de fruits.

Le stade phénologique d'un végétal fait référence à la phase spécifique de son cycle de croissance et de développement. Il décrit où le végétal se situe dans son cycle biologique en fonction des conditions météorologiques, de la saison et d'autres facteurs environnementaux. Les stades phénologiques d'un végétal comprennent plusieurs étapes clés telles que la dormance, le germé, le développement végétatif et la floraison.

On agit préférentiellement sur l'orientation des capteurs tout en cherchant à atteindre un optimum maximisant la production d'énergie électrique par rapport à une référence sans combinaison avec les végétaux.

Le pilotage des capteurs peut s'effectuer en fonction de la température extérieure et/ou du jour de la semaine, notamment en vue de diminuer l'ombre générée par les capteurs à des heures où la demande en énergie électrique est moindre.

Dans un mode de réalisation, les capteurs photovoltaïques sont orientés de manière à générer le moins d'ombre possible sur les végétaux dont les fruits n'ont pas encore atteint la coloration souhaitée.

Lorsque les fruits dont la coloration souhaitée n'a pas été atteinte, les capteurs photovoltaïques sont préférentiellement orientés de manière à générer le plus d'énergie électrique au moins durant une plage horaire prédéfinie, notamment entre 10h et 16h, et lorsque les fruits atteignent la coloration souhaitée, les capteurs photovoltaïques sont orientés de manière à diminuer l'ombre qu'ils génèrent pendant ladite plage horaire.

De préférence, au moins une caméra est utilisée pour acquérir des images des végétaux et suivre l'état de coloration des fruits. Le procédé comporte notamment le traitement automatique des images de la caméra pour détecter le stade de la coloration et pour générer une information sur la base de laquelle les capteurs sont pilotés.

Les images prises par la caméra sont préférentiellement comparées à des images de référence indiquant l'état de coloration.

Une segmentation des images prises par la caméra peut être opérée pour identifier les fruits. Un traitement colorimétrique des images prises par la caméra peut être effectué pour analyser les couleurs des fruits. La dimension et/ou la couleur des organes du fruit peut être utilisée comme indicateur pour déterminer le stade de la coloration.

Dans un mode de réalisation, si les images prises par la caméra montrent au moins 20% de fruits dont la coloration souhaitée n'a pas encore été atteinte sur le nombre total de fruits présents dans le champ d'observation de la caméra, alors un mode de pilotage des capteurs favorisant la coloration est activé.

L'état de coloration peut être périodiquement réévalué pendant la période de fructification, notamment tous les jours.

Dans un mode de réalisation, une application pour terminal mobile est mise à disposition d'au moins un utilisateur pour permettre d'entrer au moins une information relative à l'état de coloration des fruits, cette information étant transmise à un système de pilotage des capteurs.

L'application est préférentiellement configurée pour géolocaliser automatiquement le terminal mobile, et le terminal transmet au moins une information relative à l'état de coloration des fruits, ainsi qu'une information sur la localisation du terminal.

On peut prendre au moins une photographie des végétaux avec le terminal mobile, cette photographie étant analysée automatiquement pour en déduire au moins une information concernant l'état de coloration des fruits, la photographie étant de préférence géolocalisée. Les végétaux peuvent être choisis parmi les arbres fruitiers, notamment les arbres fruitiers à pépins et à noyaux, en particulier les pommiers, poiriers, pruniers, abricotiers, figuiers, actinidias, cerisiers, mandariniers, clémentiniers, et pêchers.

L'invention a encore pour objet, selon un autre de ses aspects, un procédé de culture de végétaux sous capteurs photovoltaïques orientables, dans lequel on cultive ces végétaux tout en agissant sur la coloration de leurs fruits par la mise en œuvre du procédé de coloration selon l'invention.

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
[Fig 1] La figure 1 représente de façon schématique un système de commande de l'orientation d'un capteur photovoltaïque selon l'invention ; et
[Fig 2] La figure 2 est une vue schématique d'un système de production d'énergie électrique comportant des capteurs photovoltaïques permettant la mise en œuvre du procédé de coloration selon l'invention.

### Description détaillée

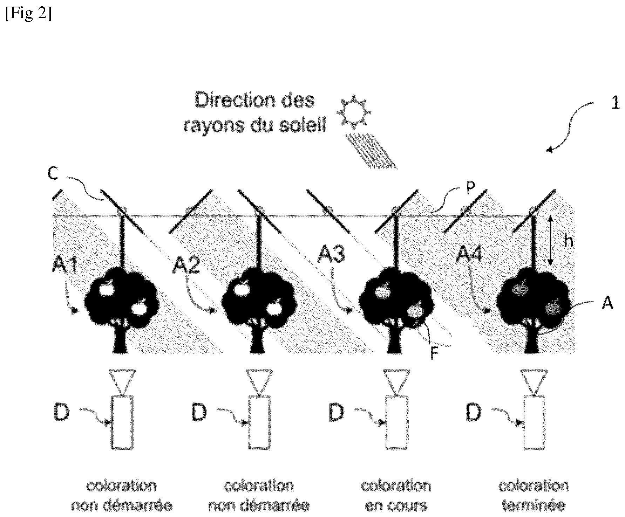

On a illustré schématiquement à la figure 2 un système de production d'énergie électrique 1, comportant une structure porteuse P et des capteurs photovoltaïques orientables C maintenus à distance non nulle du sol par la structure porteuse P, et à une hauteur h d'arbres fruitiers A, par exemple des pommiers, comportant des fruits F, situés sous les capteurs C. L'ombre solaire projetée sur les végétaux est modifiée par le changement d'orientation des capteurs C.

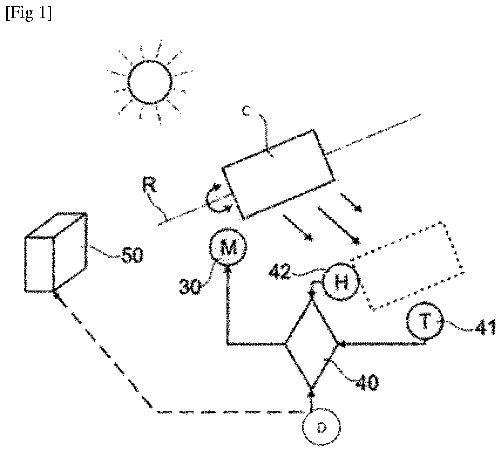

La figure 1 représente un de ces capteurs photovoltaïques C qui est mobile autour d'un axe de rotation R. Le capteur photovoltaïque C est pivoté autour de l'axe R à l'aide d'au moins un actuateur 30. Par exemple, il est prévu individuellement pour chaque capteur photovoltaïque C un actuateur 30. En variante, un même actuateur 30 peut déplacer en rotation une pluralité de capteurs photovoltaïques C.

Les actuateurs 30 comportent par exemple chacun un ou plusieurs moteurs électriques, et sont constitués par exemple par des servomoteurs.

La position à donner au capteur photovoltaïque C peut être déterminée par un calculateur local 40 qui est relié via toute interface de puissance adaptée à l'actuateur 30.

Le calculateur 40 reçoit de préférence des informations météorologiques, notamment d'une ou plusieurs sondes locales, par exemple une sonde de température 41 et une sonde d'hygrométrie 42. D'autres sondes peuvent être ajoutées pour scruter les conditions météorologiques, tels qu'un pluviomètre, anémomètre, et/ou une caméra D pour acquérir des images et visualiser l'état de développement du végétal et l'état de la coloration, ainsi qu'un ou plusieurs biocapteurs, le cas échéant. Ladite caméra D peut être soit portée par la structure P soit par une autre structure à part, soit par un drone.

Le calculateur 40 peut également échanger des données, par exemple via un réseau de téléphonie sans fil, avec un serveur distant 50, lequel peut par exemple informer le calculateur 40 de la météo à venir. Les données locales de température et de vent peuvent ainsi provenir d'un serveur météo distant.

Le calculateur 40 peut être réalisé à partir de tout micro-ordinateur ou équipement informatique permettant de piloter l'orientation des capteurs photovoltaïques C en fonction d'une ou plusieurs lois de commande donnant l'orientation à imposer aux capteurs photovoltaïques en fonction de données représentatives des stades phénologiques des végétaux, notamment l'état de la coloration, les indicateurs de l'état de la coloration des fruits comprenant en particulier leurs couleurs et/ou la taille des organes les constituant et/ou le nombre de fruits colorés par rapport au nombre total de fruits. L'orientation à imposer aux capteurs photovoltaïques C peut aussi être commandée selon la variété du végétal, les conditions météorologiques et/ou l'état de la coloration. Le calculateur 40 peut être agencé pour traiter des images délivrées par la caméra D afin de déterminer l'état de la coloration. Alternativement, un opérateur humain observe l'état de la coloration, par exemple au niveau d'une branche témoin, et dans le cas où le niveau de coloration correspond à l'existence de la population souhaitée de fruits à colorer, signale qu'il est possible d'activer un mode de pilotage des capteurs favorisant la coloration, à l'aide d'une application mobile connectée au calculateur 40.

Le calculateur 40 peut comporter une unité de calcul et une mémoire locale dans laquelle peuvent être enregistrées des données locales relatives aux végétaux et/ou à leur environnement.

La mémoire du calculateur peut également comporter des paramètres d'asservissement qui régissent l'orientation des capteurs photovoltaïques C en fonction des objectifs de coloration. Ces paramètres peuvent évoluer dans le temps et, en fonction par exemple de la saison, et privilégier la coloration ou non des fruits des végétaux.

La ou les lois de commande peuvent être initialement programmées dans le calculateur 40, ou en variante être téléchargées par le calculateur 40 à partir du serveur distant 50, ou encore être réactualisées périodiquement par le serveur distant 50.

Dans un exemple de réalisation, le calculateur 40 présente un fonctionnement autonome. En fonction de la saison, de la date de semis, du nombre de fruits présents et/ou de l'état de la coloration, et éventuellement d'autres paramètres renseignés par l'agriculteur, il pilote automatiquement et de façon journalière ou avec une autre périodicité l'orientation des capteurs photovoltaïques C de façon à atteindre l'objectif de coloration sur une période donnée.

Le calculateur 40 est agencé pour traiter les images acquises par la caméra D et identifier l'état de la coloration par la comparaison de ces images à des images de référence. Une segmentation des images acquises peut être opérée pour identifier les fruits. Un traitement colorimétrique des images peut être effectué pour analyser les couleurs des fruits. La dimension et/ou la couleur des organes du fruit peut être utilisée comme indicateur pour déterminer le stade de la coloration.

En fonction de l'état de la coloration, les capteurs C sont orientés soit pour projeter le maximum d'ombre sur les arbres A, soit pour minimiser l'ombre portée en laissant passer la lumière et favoriser ainsi la coloration des fruits par le soleil.

Par exemple, si les images prises par la caméra D montrent la présence de la population requise de fruits prêts à être colorés, alors un mode de pilotage des capteurs favorisant la coloration est activé.

Lorsque ce mode de pilotage est activé, les capteurs photovoltaïques C sont par exemple orientés pendant plusieurs jours pour favoriser le plus possible le passage de la lumière. Puis, une fois la coloration recherchée obtenue, les capteurs photovoltaïques C sont par exemple pilotés en activant les actuateurs 30 pour prendre une orientation visant à laisser passer le minimum de lumière, maximisant la production électrique.

On voit sur la figure 2 que, lorsque la coloration est en cours, les capteurs C sont orientés selon la direction des rayons du soleil, projetant ainsi le minimum d'ombre sur l'arbre A3. Au contraire, lorsque la coloration est non encore démarrée ou déjà terminée, les capteurs sont orientés de manière à porter le maximum d'ombre sur les arbres A1, A2 et A4.

## Revendications

1. Procédé de coloration de fruits (F) de végétaux (A), notamment d'arbres fruitiers, situés sous des capteurs photovoltaïques orientables (C), l'ombre projetée sur les végétaux étant modifiée par le changement d'orientation des capteurs (C), procédé dans lequel on agit automatiquement sur l'orientation des capteurs en fonction de l'état de coloration des fruits (F) de manière à augmenter l'ensoleillement par rapport à une référence de pilotage des capteurs appliquée lorsque la coloration souhaitée est atteinte ou lorsque les fruits sont non encore colorés, pour favoriser l'action du soleil sur la coloration.

2. Procédé selon la revendication précédente, l'orientation des capteurs photovoltaïques (C) étant pilotée à partir au moins de données représentatives des stades phénologiques des végétaux, notamment l'état de la coloration des fruits (F), les indicateurs de l'état de la coloration des fruits comprenant en particulier leurs couleurs et/ou la taille des organes les constituant et/ou le nombre de fruits colorés par rapport au nombre total de fruits.

3. Procédé selon l'une des deux revendications précédentes, dans lequel on agit sur l'orientation des capteurs (C) tout en cherchant à atteindre un optimum maximisant la production d'énergie électrique par rapport à une référence sans combinaison avec les végétaux (A).

4. Procédé selon la revendication précédente, dans lequel le pilotage des capteurs (C) s'effectue en fonction de la température extérieure et/ou du jour de la semaine, notamment en vue de diminuer l'ombre générée par les capteurs (C) à des heures où la demande en énergie électrique est moindre.

5. Procédé selon l'une quelconque des revendications précédentes, les capteurs photovoltaïques (C) étant orientés de manière à générer le moins d'ombre possible sur les végétaux (A) dont les fruits (F) n'ont pas encore atteint la coloration souhaitée.

6. Procédé selon l'une quelconque des revendications précédentes, dans lequel, lorsque les fruits (F) dont la coloration souhaitée n'a pas été atteinte, les capteurs photovoltaïques (C) sont orientés de manière à générer le plus d'énergie électrique au moins durant une plage horaire prédéfinie, notamment entre 10h et 16h, et lorsque les fruits (F) atteignent la coloration souhaitée, les capteurs photovoltaïques (C) sont orientés de manière à diminuer l'ombre qu'ils génèrent pendant ladite plage horaire.

7. Procédé selon l'une quelconque des revendications précédentes, au moins une caméra (D) étant utilisée pour acquérir des images des végétaux (A) et suivre l'état de coloration des fruits (F), le procédé comportant notamment le traitement automatique des images de la caméra pour détecter le stade de la coloration et pour générer une information sur la base de laquelle les capteurs (C) sont pilotés.

8. Procédé selon la revendication précédente, les images prises par la caméra (D) étant comparées à des images de référence indiquant l'état de coloration.

9. Procédé selon l'une des deux revendications précédentes, une segmentation des images prises par la caméra (D) étant opérée pour identifier les fruits (F).

10. Procédé selon l'une quelconque des revendications 7 à 9, un traitement colorimétrique des images prises par la caméra (D) étant effectué pour analyser les couleurs des fruits (F).

11. Procédé selon l'une quelconque des revendications 7 à 10, dans lequel si les images prises par la caméra (D) montrent au moins 20% de fruits dont la coloration souhaitée n'a pas encore été atteinte sur le nombre total de fruits présents dans le champ d'observation de la caméra, alors un mode de pilotage des capteurs favorisant la coloration est activé.

12. Procédé selon l'une quelconque des revendications précédentes, dans lequel l'état de coloration est périodiquement réévalué pendant la période de fructification, notamment tous les jours.

13. Procédé selon l'une quelconque des revendications précédentes, dans lequel une application pour terminal mobile est mise à disposition d'au moins un utilisateur pour permettre d'entrer au moins une information relative à l'état de coloration des fruits (F), cette information étant transmise à un système de pilotage des capteurs (C).

14. Procédé selon la revendication précédente, dans lequel l'application est configurée pour géolocaliser automatiquement le terminal mobile, et dans lequel le terminal transmet au moins une information relative à l'état de coloration des fruits (F), ainsi qu'une information sur la localisation du terminal.

15. Procédé selon l'une des deux revendications précédentes, dans lequel on prend au moins une photographie des végétaux avec le terminal mobile, et dans lequel cette photographie est analysée automatiquement pour en déduire au moins une information concernant l'état de coloration des fruits (F), la photographie étant de préférence géolocalisée.

16. Procédé selon l'une quelconque des revendications précédentes, les végétaux (A) étant choisis parmi les arbres fruitiers, notamment les arbres fruitiers à pépins et à noyaux, en particulier les pommiers, poiriers, pruniers, abricotiers, cerisiers, mandariniers, clémentiniers, et pêchers.

17. Procédé de culture de végétaux sous capteurs photovoltaïques orientables, dans lequel on cultive ces végétaux (A) tout en agissant sur la coloration de leurs fruits (F) par la mise en œuvre du procédé de coloration selon l'une quelconque des revendications 1 à 16.
